# EUROPÄISCHE PATENTSCHRIFT

(11) **EP 3 443 245 B1**
(45) Veröffentlichungstag und Bekanntmachung des Hinweises auf die Patenterteilung: **22.04.2020**
(21) Anmeldenummer: 17710250.6
(22) Anmeldetag: 10.03.2017
(51) Int. Cl.: F16K 7/12

(54) **VENTILKÖRPER UND VERFAHREN ZUM HERSTELLEN DES VENTILKÖRPERS**
VALVE BODY AND METHOD FOR PRODUCING THE VALVE BODY
CORPS DE VANNE ET PROCÉDÉ DE FABRICATION DU CORPS DE VANNE

(30) Priorität: 12.04.2016 DE 102016106724
(43) Veröffentlichungstag der Anmeldung: 20.02.2019
(73) Patentinhaber: GEMÜ Gebr. Müller Apparatebau GmbH & Co. Kommanditgesellschaft, 74653 Ingelfingen (DE)
(72) Erfinder: RUECKEL, Thomas, 6010 Kriens (CH); RUDOLF, Jean-Claude, 6012 Obernau (CH)
(74) Vertreter: DREISS Patentanwälte PartG mbB
(86) Internationale Anmeldenummer: PCT/EP2017/055742
(87) Internationale Veröffentlichungsnummer: WO 2017/178163

(56) Entgegenhaltungen:
- DE-A1-102006 010 956
- DE-A1-102009 020 272
- DE-B3- 10 238 585

## Beschreibung

Die Erfindung betrifft einen Ventilkörper nach dem Oberbegriff des Anspruchs 1 sowie ein Verfahren zum Herstellen des Ventilkörpers nach dem Oberbegriff eines nebengeordneten Anspruchs.

Es ist bekannt, einen Ventilkörper und eine Membran mittels Ultraschall-Verschweißung zu verbinden.

DE 10 2006 010 956 A1 offenbart ein Ventil , bei dem die Membran mit der Auflage mittels Laserschweißen verschweißt ist.

DE 102 38 585 B3 offenbart ein Fluidmodul mit einem einstückigen Grundelement und einem Membranelement sowie eine Vielzahl von Verbindungstechniken.

DE 10 2009 020 272 A1 offenbart ein Laserschweissystem, bei dem ein optisches Element zwischen einem Kollimator und einem Fokussierungsmittel angeordnet ist.

Die Probleme des Standes der Technik werden durch einen Ventilkörper nach dem Anspruch 1 sowie ein Verfahren zum Herstellen des Ventilkörpers nach einem nebengeordneten Anspruch gelöst.

Somit wird gemäß einem ersten Aspekt vorgeschlagen, dass der Ventilkörper und eine Membran im Bereich einer Laserschweißnaht stoffschlüssig und fluiddicht miteinander verbunden sind. So ist die Membran verliersicher und irreversibel mit dem Ventilkörper verbunden. Hierdurch kann ohne die Zugabe von Zuschlagstoffen in Form von absorbierenden Pigmenten die Laserschweißnaht zur Verfügung gestellt werden. Auch wird eine reduzierte Partikelbildung im Bereich der Laserschweißnaht erreicht und damit eine zuverlässige Mediumdichtigkeit gewährleistet.

Darüber hinaus ist es nicht notwendig, eine spezielle Geometrie zur Herstellung der Laserschweißnaht vorzusehen. Vielmehr kann eine Parallelanordnung der zu verbindenden Flächen ausreichen, was sich vorteilhaft auf einen nötigen Platzbedarf für die Laserschweißnaht auswirkt.

In einer vorteilhaften Ausführungsform ist die Membran für Laserlicht mit einer Wellenlänge im Wesentlichen transparent, wobei der Ventilkörper Laserlicht mit derselben Wellenlänge im Wesentlichen absorbiert. Hierdurch wird garantiert, dass die Laserschweißnaht zwischen der Membran und dem Ventilkörper entsteht.

Es umfasst das Material des Ventilkörpers Polypropylen und/oder Polyethylen. Das Material der Membran umfasst ein thermoplastisches Elastomer. Diese Materialkombination ist besonders zur Herstellung der Laserschweißnaht geeignet.

In einer vorteilhaften Ausführungsform ist die Membran innerhalb einer Ausnehmung für ein Druckstück eines Ventilantriebs angeordnet. Hierdurch wird insbesondere sichergestellt, dass die Membran vor der Erzeugung der Laserschweißnaht korrekt positioniert wird. Darüber hinaus kann in der Ausnehmung ein die Membran betätigendes Element wie beispielsweise das Druckstück geschützt angeordnet werden.

Ein weiter Aspekt betrifft das Verfahren zur Herstellung des Ventilkörpers, wobei der Ventilkörper und die Membran im Bereich der Laserschweißnaht stoffschlüssig und fluiddicht miteinander verbunden werden.

In einer vorteilhaften Ausführungsform wird die Membran in eine Ausnehmung des Ventilkörpers eingebracht. Die Membran wird anschließend mittels einer Anpressvorrichtung auf eine Anlagefläche des Ventilkörpers gedrückt. So kann vor Erzeugung der Laserschweißnaht garantiert werden, dass bei der Erhitzung des Bereichs zwischen der Membran und dem Ventilkörper die stoffschlüssige Verbindung erzeugt wird.

In einer vorteilhaften Ausführungsform ist die Anpressvorrichtung für Laserlicht zur Herstellung der Laserschweißnaht im Wesentlichen transparent. So kann vorteilhaft das Laserlicht ungehindert bis zu dem geplanten Verbindungsabschnitt vordringen und gleichzeitig der nötige Anpressdruck garantiert werden.

In einer vorteilhaften Ausführungsform wird ein Verbindungsabschnitt zwischen der Membran und dem Ventilkörper mittels eines Fügelasers mit Laserlicht bestrahlt, wobei das Laserlicht von der Membran im Wesentlichen transmittiert wird und in dem Verbindungsbereich absorbiert wird. Durch die Transmission des Laserlichts durch die Membran hindurch wird insbesondere verhindert, dass die Membran außerhalb der Laserschweißnaht zerstört bzw. beschädigt wird.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Für funktionsäquivalente Größen und Merkmale werden in allen Figuren auch bei unterschiedlichen Ausführungsformen die gleichen Bezugszeichen verwendet. Nachfolgend werden die beispielhaften Ausführungsformen der Erfindung unter Bezugnahme auf die Zeichnung erläutert. In der Zeichnung zeigen:
Figur 1 in perspektivischer Ansicht eine Ventilanordnung;
Figur 2 in einer schematischen Schnittansicht einen Ventilkörper;
Figuren 3 und 4
   in einer schematischen Schnittansicht einen Fertigungsschritt zur Herstellung des Ventilkörpers; und

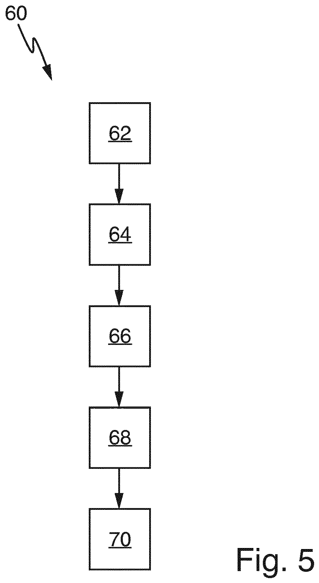

Figur 5 ein schematisches Ablaufdiagramm.

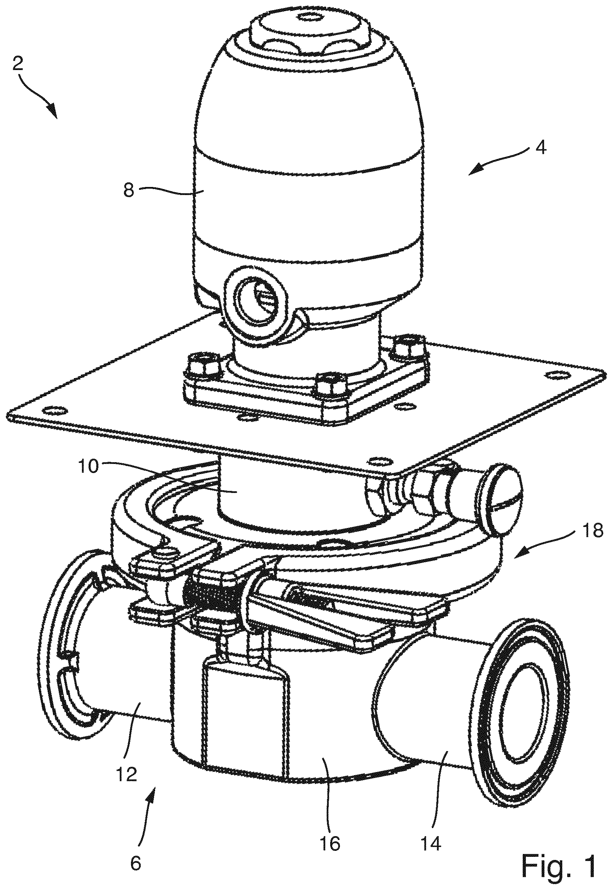

Figur 1 zeigt in perspektivischer Ansicht eine Ventilanordnung 2 mit einem Ventilantrieb 4 und einem Ventilkörper 6, welcher insbesondere als Einweg-Ventilkörper ausgebildet sein kann. Der Ventilantrieb 4 umfasst unter anderem eine Antriebseinheit 8 und ein Zwischenstück 10. Der Ventilkörper 6 umfasst Anschlüsse 12 und 14, durch die ein zu stellendes Fluid einem Stellabschnitt 16 zugeführt bzw. von diesem abtransportiert werden kann. Mittels einer Klemmvorrichtung 18 werden das Zwischenstück 10 und der Ventilkörper 6 zueinander festgelegt.

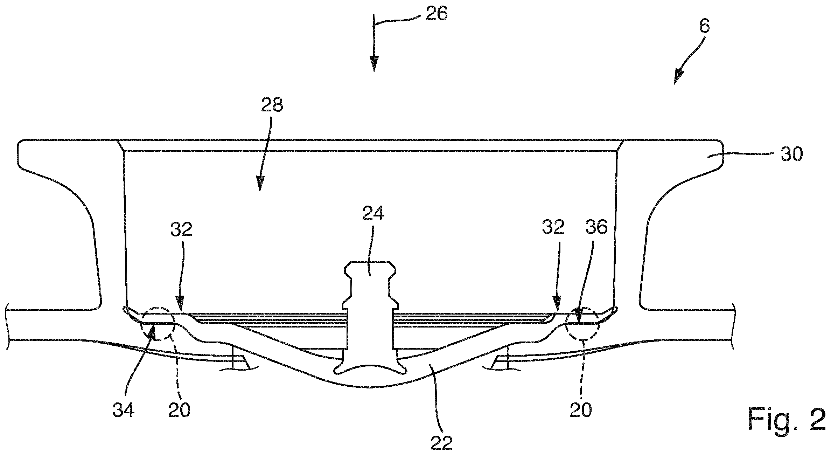

Figur 2 zeigt in einer schematischen Schnittansicht den Ventilkörper 6. Eine Membran 22 wirkt zum Verschließen des Stellabschnitts 16 mit einem nicht gezeigten Ventilsitz zusammen, welcher Teil des Ventilkörpers 6 im Bereich des Stellabschnitts 16 ist. Des Weiteren wird zum Verschließen des Stellabschnitts 16 die Membran 22 mit einem nicht gezeigten und von der Antriebseinheit 8 angetriebenen Druckstück in Zustellrichtung 26 auf den Ventilsitz gedrückt. Des Weiteren umfasst die Membran 22 einen Membranpin 24, der insbesondere zum Öffnen des Stellabschnitts 16 entgegen der Zustellrichtung 26 vorgesehen ist. Der Membranpin 24 ist bevorzugt mit der Membran 22 vergossen.

In einem im Wesentlichen kreisringförmigen Verbindungsabschnitt 20 sind der Ventilkörper 6 und die Membran 22 mittels einer Laserschweißnaht stoffschlüssig und fluiddicht miteinander verbunden. Damit sind der Ventilkörper 6 und die Membran 22 im Bereich einer kreisringförmigen Laserschweißnaht stoffschlüssig und fluiddicht miteinander verbunden. Selbstverständlich können die Laserschweißnaht und der Verbindungsabschnitt 20 auch anders als kreisringförmig ausgebildet sein. Die Membran 22 ist zumindest im Bereich des Verbindungsbereichs 20 für Laserlicht mit einer Wellenlänge im Wesentlichen transparent, wobei der Ventilkörper 6 zumindest im Bereich des Verbindungsbereichs 20 Laserlicht mit derselben Wellenlänge im Wesentlichen absorbiert. Das Material des Ventilkörpers 6 umfasst Polypropylen und/oder Polyethylen. Das Material der Membran 22 umfasst ein thermoplastisches Elastomer, TPE.

Der Ventilkörper 6 umfasst eine Ausnehmung 28, in der insbesondere das Druckstück aufnehmbar ist. Des Weiteren umfasst die Ausnehmung 28 Anlagebereiche für die Membran 22, insbesondere in dem Verbindungsabschnitt 20. Eine kreisringförmige, entgegen der Zustellrichtung 26 orientierte Oberfläche 32 der Membran 22 ist im Wesentlichen parallel zu einer Anlagefläche 34 der Membran 22 im Verbindungsabschnitt 20 sowie parallel zu einer Anlagefläche 36 des Ventilkörpers 6 angeordnet, um eine Brechung des Laserlichts zur Herstellung der Laserschweißnaht zu reduzieren bzw. zu vermeiden.

Außerhalb der Ausnehmung 28 weist der Ventilkörper 6 einen kreisringförmigen Klemmabschnitt 30 zur Verklemmung des Ventilkörpers 6 mit dem Zwischenstück 10 auf.

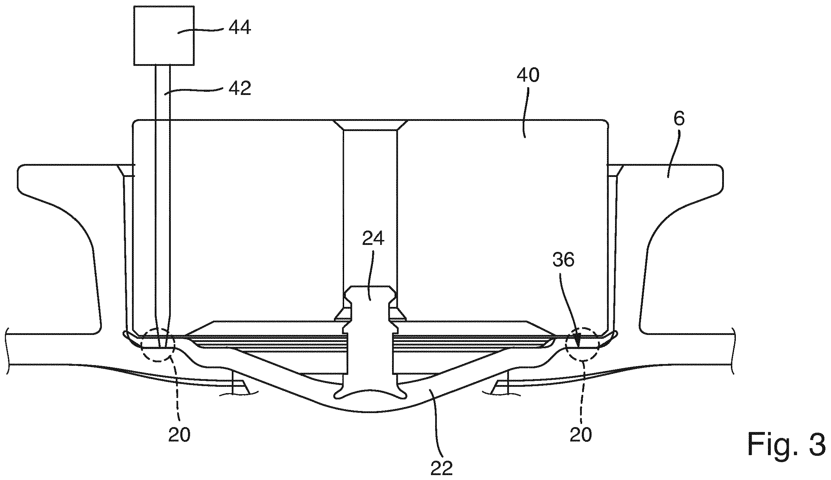

In Figur 3 ist in einer schematischen Schnittansicht ein Fertigungsschritt zur Herstellung des Ventilkörpers 6 gezeigt. Eine Anpressvorrichtung 40 drückt in dem Verbindungsbereich 20 die Membran 22 auf die Anlagefläche 36 des Ventilkörpers 6. Hierzu wurde zuvor die Membran 22 in die Ausnehmung 28 des Ventilkörpers 6 eingebracht. Anschließend wird die Membran 22 mittels der Anpressvorrichtung 40 auf die Anlagefläche 36 des Ventilkörpers 6 gedrückt.

Die Anpressvorrichtung 40 ist für Laserlicht gemäß einem schematisch dargestellten Laserstrahl 42, der von einem Fügelaser 44 erzeugt wird, im Wesentlichen transparent. Das bedeutet, dass Licht mit der Wellenlänge des Laserstrahls 42 von der Anpressvorrichtung 40 in den Verbindungsbereich 20 transmittiert wird. Darüber hinaus sind die Oberflächen für den Eintritt und den Austritt des Laserstrahl 42 im Wesentlichen parallel zu den Anlageflächen 36 und 34 sowie zu der Oberfläche 32, um eine Brechung des Laserlichts zu reduzieren bzw. zu verhindern.

Die Membran 22 transmittiert ebenso das Laserlicht des Laserstrahls 42. Im Bereich der Anlagefläche 36 wird das Laserlicht des Laserstrahl 42 von dem Material des Ventilkörpers 6 absorbiert, was zu einer Temperaturerhöhung und einer entsprechenden stoffschlüssigen und fluiddichten Verbindung zwischen dem Material der Membran 22 und dem Material des Ventilkörpers 6 führt.

Durch Bewegung des Fügelasers 44 oder durch Bewegung der Anordnung umfassend die Membran 22, den Ventilkörper 6 und die Anpressvorrichtung 40 wird der Laserstrahl 42 entlang einer Kreisbahn entlang des Verbindungsabschnitts 20 geführt, womit der Verbindungsabschnitt mittels des Fügelasers 44 mit Laserlicht bestrahlt wird. Die Anpressvorrichtung 40 besteht insbesondere aus Quarzglas.

Die Wellenlänge des Laserlichts, welches gemäß dem Laserstrahl 42 von dem Fügelaser 44 ausgestrahlt wird, ist im Bereich zwischen 1400-2500 nm, insbesondere im Bereich von 1800-2000 nm, insbesondere im Bereich um 1900 nm angeordnet. Vorteilhaft kann für diese Wellenlängenbereiche bei der Verwendung von TPE für die Membran 22 und PP für den Ventilkörper 6 auf einfache Art und Weise eine fluiddichte Verbindung zwischen der Membran 22 und Ventilkörper 6 im Sinne der Laserschweißnaht hergestellt werden. Mithin können vorliegend zwei nahezu blicktransparente Bauteile nach dem Prinzip der Eigenabsorption des jeweiligen Materials Laser-verschweißt werden. Das bedeutet, dass die Wellenlänge des Laserlichts derart auf die Materialeigenschaften und die Molekülschwingungen des Materials abgestimmt ist, sodass die Laserschweißnaht hergestellt werden kann. Insbesondere enthalten die Membran 22 und der Ventilkörper 6 keine Zuschlagstoffe, die eine Absorption von Laserlicht im Bereich der vorgenannten Wellenlängen begünstigen. Somit sind die Membran 22 auch als absorptionszuschlagstofffreie Membran und der Ventilkörper 6 auch als absorptionszuschlagsstofffreier Ventilkörper bezeichenbar. Diese Zuschlagstofffreiheit ist insbesondere bei Anwendungen im Biologie- oder Gesundheitsbereich von Bedeutung, da der Ventilkörper keine Stoffe in das gestellte Fluid absondern darf.

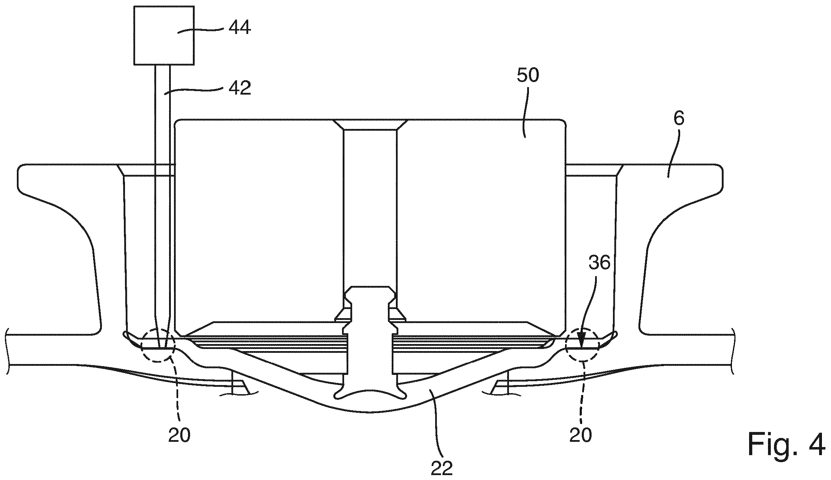

Figur 4 zeigt im Unterschied zu Figur 3 eine Anpressvorrichtung 50, die nicht notwendigerweise transparent ausgebildet sein muss. Vielmehr drückt die Anpressvorrichtung 50 die Membran 22 derart gegen die Anlagefläche 36, sodass im Verbindungsbereich 20 ein ausreichender Anpressdruck zwischen der Membran 22 und dem Ventilkörper 6 herrscht und gleichzeitig der Laserstrahl 42 direkt auf die Oberfläche 32 der Membran 22 trifft ohne die Anpressvorrichtung 50 zu durchlaufen.

Figur 5 zeigt ein schematisches Ablaufdiagramm 60. In einem ersten Schritt 62 wird der Ventilkörper 6 in einer Vorrichtung einer Produktionsanlage festgelegt. In einem zweiten Schritt 64 wird die Membran 22 an der gewünschten Position innerhalb der Ausnehmung 28 positioniert. In einem dritten Schritt 66 wird die Anpressvorrichtung 40 in die Ausnehmung 28 eingeführt, um die Membran 22 mit einem Mindestanpressdruck an die Anlagefläche 36 zu drücken. In einem vierten Schritt 68 wird mittels des Fügelasers 44 der Laserstrahl 42 auf den Verbindungsbereich 20 gerichtet, sodass der Laserstrahl 42 zumindest einmal den kreisringförmigen Verbindungsabschnitt 20 vollständig durchläuft. In einem fünften Schritt 70 wird die Anpressvorrichtung 40 entfernt und der Laserschweißprozess ist abgeschlossen. Somit werden der Ventilkörper 6 und die Membran 22 im Bereich der kreisringförmigen Laserschweißnaht stoffschlüssig und fluiddicht miteinander verbunden.

## Patentansprüche

1. Ein Ventilkörper (6) umfassend eine mit einem Ventilsitz zusammenwirkende Membran (22), wobei der Ventilkörper (6) und die Membran (22) im Bereich einer Laserschweißnaht stoffschlüssig und fluiddicht miteinander verbunden sind, **dadurch gekennzeichnet,**
- **dass** die Membran (2) und der Ventilkörper (6) absportionszuschlagstofffrei ausgeführt sind,
- **dass** das Material des Ventilkörpers (6) Polypropylen und/oder Polyethylen umfasst, und
- **dass** das Material der Membran (22) ein thermoplastisches Elastomer umfasst.

2. Der Ventilkörper (6) nach dem Anspruch 1, wobei die Membran (11) für Laserlicht mit einer Wellenlänge im Wesentlichen transparent ist, und wobei der Ventilkörper (6) Laserlicht mit derselben Wellenlänge im Wesentlichen absorbiert.

3. Der Ventilkörper (6) nach einem der vorstehenden Ansprüche, wobei die Membran (22) innerhalb einer Ausnehmung (28) für ein Druckstück eines Ventilantriebs (4) angeordnet ist.

4. Eine Ventilanordnung (2) umfassend den Ventilkörper (6) nach einem der vorstehenden Ansprüche und einen Ventilantrieb (4) mit einem mit der Membran (22) zusammenwirkenden Druckstück.

5. Ein Verfahren zum Herstellen eines Ventilkörpers (6), welcher eine mit einem Ventilsitz zusammenwirkende Membran (22) umfasst, wobei der Ventilkörper (6) und die Membran (22) im Bereich einer Laserschweißnaht stoffschlüssig und fluiddicht miteinander verbunden werden, **dadurch gekennzeichnet,**
- **dass** die Membran (2) und der Ventilkörper (6) absportionszuschlagstofffrei ausgeführt sind,
- **dass** das Material des Ventilkörpers (6) Polypropylen und/oder Polyethylen umfasst, und
- **dass** das Material der Membran (22) ein thermoplastisches Elastomer umfasst.

6. Das Verfahren nach dem Anspruch 5, wobei die Membran (22) in eine Ausnehmung (28) des Ventilkörpers (6) eingebracht wird, und wobei die Membran (22) anschließend mittels einer Anpressvorrichtung (40) auf eine Anlagefläche (36) des Ventilkörpers (6) gedrückt wird.

7. Das Verfahren nach dem Anspruch 6, wobei die Anpressvorrichtung (40) für Laserlicht zur Herstellung der Laserschweißnaht im Wesentlichen transparent ist.

8. Das Verfahren nach Anspruch 6 oder 7, wobei ein Verbindungsabschnitt (20) zwischen der Membran (22) und dem Ventilkörper (6) mittels eines Fügelasers (44) mit Laserlicht bestrahlt wird, wobei das Laserlicht von der Membran (22) im Wesentlichen transmittiert wird und in dem Verbindungsbereich (20) absorbiert wird.

## Claims

1. A valve body (6), comprising a membrane (22) cooperating with a valve seat, the valve body (6) and the membrane (22) being connected to each other in the area of a laser weld in an integral and fluid-tight manner, **characterized in**
- **that** the membrane (22) and the valve body (6) are configured free of absorption additives,
- **that** the material of the valve body (6) comprises polypropylene and/or polyethylene, and
- **that** the material of the membrane (22) comprises a thermoplastic elastomer.

2. The valve body (6) as claimed in claim 1, wherein the membrane (11) is substantially transparent for laser light of one wavelength, and wherein the valve body (6) substantially absorbs laser light of the same wavelength.

3. The valve body (6) as claimed in one of the preceding claims, wherein the membrane (22) is arranged inside a recess (28) for a thrust piece of a valve drive (4).

4. A valve arrangement (2), comprising the valve body (6) as claimed in one of the preceding claims and a valve drive (4) comprising a thrust piece cooperating with the membrane (22).

5. A method for producing a valve body (6) comprising a membrane (22) cooperating with a valve seat, wherein the valve body (6) and the membrane (22) are connected to each other in the area of a laser weld in an integral and fluid-tight manner, **characterized in**
- **that** the membrane (22) and the valve body (6) are configured free of absorption additives,
- **that** the material of the valve body (6) comprises polypropylene and/or polyethylene, and
- **that** the material of the membrane (22) comprises a thermoplastic elastomer.

6. The method as claimed in claim 5, wherein the membrane (22) is introduced in a recess (28) of the valve body (6), and wherein the membrane (22) is pressed by means of a pressing device (40) onto an abutment surface (36) of the valve body (6).

7. The method as claimed in claim 6, wherein the pressing device (40) is substantially transparent for laser light for producing the laser weld.

8. The method as claimed in claim 6 or 7, wherein a connecting portion (20) between the membrane (22) and the valve body (6) is irradiated with laser light by means of a fusion laser (44), wherein the laser light substantially transmits the membrane (22) and is absorbed in the connecting portion (20).

## Revendications

1. Corps de vanne (6) comprenant une membrane (22) agissant de concert avec un siège de vanne, dans lequel le corps de vanne (6) et la membrane (22) sont reliés l'un à l'autre, au niveau d'un cordon de soudure laser, par liaison de matière et de manière étanche aux fluides, **caractérisé par le fait**
- **que** la membrane (2) et le corps de vanne (6) sont réalisés de manière à être exempts d'adjuvant d'absorption,
- **que** le matériau du corps de vanne (6) comprend du polypropylène et/ou du polyéthylène, et
- **que** le matériau de la membrane (22) comprend un élastomère thermoplastique.

2. Corps de vanne (6) selon la revendication 1, dans lequel la membrane (11) est pour l'essentiel transparente pour la lumière laser ayant une longueur d'onde, et dans lequel le corps de vanne (6) absorbe pour l'essentiel la lumière laser ayant la même longueur d'onde.

3. Corps de vanne (6) selon l'une quelconque des revendications précédentes, dans lequel la membrane (22) est agencée à l'intérieur d'un évidement (28) pour une pièce de pression d'un entraînement de vanne (4).

4. Ensemble de vanne (2) comprenant ledit corps de vanne (6) selon l'une quelconque des revendications précédentes et un entraînement de vanne (4) ayant une pièce de pression agissant de concert avec la membrane (22).

5. Procédé de fabrication d'un corps de vanne (6) qui comprend une membrane (22) agissant de concert avec un siège de vanne, dans lequel le corps de vanne (6) et la membrane (22) sont reliés l'un à l'autre, au niveau d'un cordon de soudure laser, par liaison de matière et de manière étanche aux fluides, **caractérisé par le fait**
- **que** la membrane (2) et le corps de vanne (6) sont réalisés de manière à être exempts d'adjuvant d'absorption,
- **que** le matériau du corps de vanne (6) comprend du polypropylène et/ou du polyéthylène, et
- **que** le matériau de la membrane (22) comprend un élastomère thermoplastique.

6. Procédé selon la revendication 5, dans lequel la membrane (22) est introduite dans un évidement (28) du corps de vanne (6), et dans lequel, ensuite, la membrane (22) est pressée sur une surface d'appui (36) du corps de vanne (6) au moyen d'un dispositif de pression (40).

7. Procédé selon la revendication 6, dans lequel le dispositif de pression (40) est pour l'essentiel transparent pour la lumière laser destinée à réaliser le cordon de soudure laser.

8. Procédé selon la revendication 6 ou 7, dans lequel une portion de jonction (20) entre la membrane (22) et le corps de vanne (6) est exposée au rayonnement de la lumière laser au moyen d'un laser à joindre (44), dans lequel la lumière laser est pour l'essentiel transmise par la membrane (22) et est absorbée dans la zone de jonction (20).
